Europäisches Patentamt

European Patent Office

Office européen des brevets

(19)

(11) Veröffentlichungsnummer: **0 000 749**
**B1**

(12) **EUROPÄISCHE PATENTSCHRIFT**

(21) Anmeldenummer: **78100535.0**

(22) Anmeldetag: **28.07.78**

(51) Int. Cl.³: **H 01 F 1/11, G 11 B 5/62**
**G 11 B 5/70, C 01 G 49/06**

(54) Verfahren zur Herstellung von nadelförmigen, ferrimagnetischen Eisenoxiden und deren Verwendung

(30) Priorität: **05.08.77 DE 2735316**

(43) Veröffentlichungstag der Anmeldung:
**21.02.79 Patentblatt 79/04**

(45) Bekanntmachung des Hinweises auf die Patenterteilung:
**23.07.80 Patentblatt 80/15**

(84) Benannte Vertragsstaaten:
**DE FR GB**

(56) Entgegenhaltungen:
FR - A - 2 130 407
US - A - 3 082 067
Acta Crystallographica, Teil 13, November 1960,
Seiten 932—935, Morphology of synthetic
submicroscopic crystals of $\alpha$ and $\gamma$ FeOOH and of
$\gamma$Fe$_2$O$_3$ prepared from FeOOH, G. W. van
Ooosterhout
Journal of the Physical Society of Japan, Teil 18,
Nr. 1, Januar '63, Seiten 106—116, An electron
diffraction study and a theory of the
transformation from $\gamma$Fe$_2$O$_3$ to $\alpha$Fe$_2$O$_3$; Sakeji
Kachi

(73) Patentinhaber: **BASF Aktiengesellschaft**
**Carl-Bosch-Strasse 38**
**D - 6700 Ludwigschafen (DE)**

(72) Erfinder: **Brodt, Rudolf, Dr.**
**Beethovenstrasse 6**
**D - 6940 Weinheim (DE)**
**Jakusch, Helmut, Dr.**
**Lorscher Ring 6c**
**D - 6710 Frankenthal (DE)**
**Koester, Eberhard, Dr.**
**Max-Slevogt-Strasse 23**
**D - 6710 Frankenthal (DE)**
**Loeser, Werner, Dr.**
**Klagenfurter Strasse 16**
**D - 6700 Ludwigschafen (DE)**
**Ohlinger, Manfred, Dr.**
**Anselm-Feuerback-Strasse 13**
**D - 6710 Frankenthal (DE)**
**Sarnecki, Wilhelm, Dr.**
**Woogstrasse 48**
**D - 6703 Limburgerhof (DE)**
**Steck, Werner, Dr.**
**Lorscher Strasse 3**
**D - 6704 Mutterstadt (DE)**

Courier Press, Leamington Spa, England.

### Verfahren zur Herstellung von nadelförmigen, ferrimagnetischen Eisenoxiden und deren Verwendung

Die Erfindung betrifft ein Verfahren zur Herstellung nadelförmiger ferrimagnetischer Eisenoxide durch Entwässern nadelförmiger Eisen(III)oxidhydroxide zu nadelförmigen Eisen(III)oxiden, anschließender Reduktion dieser Eisen(III)oxide bei Temperaturen zwischen 300 und 650°C mittels in diesem Temperaturbereich zersetzlicher organischer Verbindungen und Oxidation der resultierenden Produkte mit sauerstoffhaltigen Gasen bei 200 bis 500°C sowie deren Verwendung zur Herstellung magnetischer Aufzeichnungsträger.

Nadelförmige ferrimagnetische Eisenoxide, wie Magnetit und Gamma-Eisen(III)oxid, werden seit langem in großem Umfang als magnetisierbares Material bei der Herstellung von magnetischen Aufzeichnungsträgern eingesetzt. Zur Herstellung des vor allem verwendeten Gamma-Eisen(III)oxids sind bereits eine Vielzahl von Verfahren bekannt geworden. So beschreibt bereits die GB—PS 675 260 ein Verfahren zur Gewinnung von Gamma-Eisen(III)oxid, bei welchem nadelförmiges $\alpha$-Eisenoxidhydroxid (Goethit) zum $\alpha$-Eisen(III)oxid entwässert, in reduzierender Atmosphäre bei mehr als 300°C zum Magnetit umgewandelt und an Luft bei Temperaturen unterhalb 450°C zum nadelförmigen Gamma-Eisen(III)oxid oxidiert wird. Im Verlaufe der Bemühungen zur Verbesserung der kristallinen, mechanischen und auch magnetischen Eigenschaften solcher Materialien wurde diieser Prozeß in seinen einzelnen Stufen mehrfach variiert, sowie gleichfalls durch Änderung der Einsatzstoffe abgewandelt.

Nahezu gleichzeitig mit den Arbeiten zu dem Verfahren gemäß der britischen Patentschrift wurden nach der in der DE—PS 801 352 offenbarten Weise, nämlich durch Behandlung von unmagnetischen Eisenoxiden mit den Salzen kurzkettiger Carbonsäuren und anschließenden Erhitzen, geeignete magnetische Eisenoxide erhalten. Der danach gewonnene Magnetit läßt sich durch Oxidation bei 200 bis 400°C ebenfalls in Gamma-Eisen(III)oxid überführen.

Durch die US—PS 2 900 236 ist dann bekannt geworden, daß sich sämtliche organische Verbindungen, welche bei Temperaturen unterhalb 540°C unter geringer Teer- und Aschebildung zersetzlich sind, für die Reduktion der unmagnetischen Eisenoxide zum Magnetit eignen. Dazu wird des Eisenoxide mit der gasförmigen, festen oder flüssigen organischen Substanz in Kontakt gebracht und auf eine Temperatur von 540 bis 650°C erhitzt. Während die US—PS 2 900 236 alle entsprechenden organischen Substanzen unter besonderer Nennung von Wachs, Stärke und Öl hierfür als brauchbar angibt, werden in der DE—AS 12 03 656 auf das Eisenoxid aufgefällte Salze löslicher Seifen, in der DE—OS 20 64 804 sowohl höhere Kohlenwasserstoffe, höhere Alkohole und Amine, höhere Fettsäuren und deren Salze sowie Öle, Fette und Wachse, in der DD—PS 91 017 ebenfalls langkettige Carbonsäuren bzw. deren Salze, in der DE—AS 17 71 327 aliphatische Monocarbonsäuren mit 8 bis 24 Kohlenstoffatomen gegebenenfalls in Mischung mit Morpholin' und in der JP—OS 80 499/1975 organische Verbindungen, wie z.B. Äthanol, enthaltende Inertgase als Reduktionsmittel für die Gewinnung von Magnetit aus unmagnetischen Eisenoxiden angeführt. In den genannten vorbekannten Verfahren wird teils unter Luftausschluß erhitzt, wobei die Reaktion auf der Stufe des Magnetits stehenbleibt oder aber in Gegenwart von Luft, wodurch der Magnetit sofort zum Gamma-Eisen(III)oxid oxidiert wird.

Ausgangsstoffe für diese Umwandlung der Eisenoxide mittels organischer Substanzen waren hierbei vorwiegend die entsprechenden $\alpha$-Modifikationen, wie $\alpha$-FeOOH oder $\alpha$-Fe$_2$O$_3$, jedoch wurde auch bereits $\delta$-FeOOH (DE—AS 12 03 656) sowie $\gamma$-FeOOH (DE—OS 22 12 435) mit Erfolg eingesetzt.

Die angegebenen vielfältigen Bemühungen zur Verbesserung der für die Herstellung von magnetischen Aufzeichnungsträgern geeigneten magnetischen Eisenoxiden machen das Bestreben offenbar, auf diese Weise sowohl den steigenden technischen Anforderungen an die Informationsträger zu begegnen als auch die Nachteile anderer ebenfalls einsetzbarer magnetischer Materialien auszugleichen.

Der Erfindung lag somit die Aufgabe zugrunde, die bekannten nadelförmigen ferrimagnetischen Eisenoxide zu verbessern und von den bisherigen Nachteilen zu befreien. Insbesondere war Aufgabe der Erfindung, nadelförmiges Gamma-Eisen(III)oxid bereitzustellen, das sich durch hohe Werte bei der Koerzitivfeldstärke und der Remanenz, durch gute Kristallinität und durch mechanische und magnetische Stabilität auszeichnet.

Es wurde nun gefunden, daß sich nadelförmige ferrimagnetische Eisenoxide durch Entwässern nadelförmiger Eisen(III)oxidhydroxide zu nadelförmigen Eisen(III)oxiden, anschließender Reduktion dieser Eisen(III)oxide bei Temperaturen zwischen 300 und 650°C mittels in diesem Temperaturbereich zersetzlicher organischer Verbindungen und Oxidation des Reduktionsproduktes mit sauerstoffhaltigen Gasen bei 200 bis 500°C mit den gemäß Aufgabe geforderten Eigenschaften erhalten lassen, wenn das eingesetzte nadelförmige Eisen(III)oxidhydroxid aus einem Gemenge aus Goethit und Lepidokrokit mit einem Lepidokrokitanteil von mindestens 60% und bis zu 98% besteht und bei Temperaturen von 200 bis 700°C entwässert wird.

Besonders vorteilhaft ist es, wenn im erfindungsgemäßen Verfahren die nadelförmigen Eisen(III)-oxihydroxide des Gemenges ein Längen-zu-Dickenverhältnis von mindestens 10 aufweisen und bei 300 bis 650°C entwässert werden.

Vorzugsweise bestehen die aus Goethit und Lepidokrokit zusammengesetzten Eisen(III)oxihydroxide zu 70 bis 98% aus Lepidokrokit.

Die für das erfindungsgemäße Verfahren eingesetzten Gemenge lassen sich unter geeigneten Reaktionsbedingungen aus Eisen(II)salzlösungen mit Alkalien unter gleichzeitiger Oxidation herstellen. Als besonders zweckmäßig hat es sich erwiesen, aus einer wäßrigen Eisen(II)chloridlösung mittels Alkalien, wie Alkalihydroxid oder Ammoniak, bei Temperaturen zwischen 10 und 32°C und kräftigem Rühren zur Erzeugung feiner Luftblasen, Eisen(III)oxidhydrat-Keime bis zu einer Menge von 25 bis 60 Molprozent des eingesetzten Eisens zu bilden, aus denen dann anschließend bei einer Temperatur zwischen 25 und 70°C und bei einem durch Zusatz weiterer Alkalimengen eingestellen pH-Wert von 4,0 bis 5,8 unter intensiver Luftverteilung durch Zuwachs das Endprodukt entsteht.

Nach beendetem Wachstum soll der Feststoffgehalt an Eisen(III)oxidhydroxid in der wäßrigen Suspension zwischen 10 und 50 g/l, bevorzugt bei 15 bis 45 g/l, liegen. Nach dem Abfiltrieren und Auswaschen des Niederschlags werden die so erhaltenen Eisen(III)oxidhydrat-Gemenge bei 60 bis 200°C getrocknet.

Nach der beispielhaft angeführten Verfahrensweise lassen sich stabile Kristallnadeln des Goethit-Lepikrokit-Gemenges mit mindestens 60% und bis zu 98% Lepidokrokit erhalten, welche nahezu keine dentritischen Verzweigungen aufweisen. Diese nadelförmigen Goethit-Lepikrokit-Gemenge weisen eine mittlere Teilchengröße von 0,2 bis 1,5, üblicherweise von 0,3 bis 1,2 $\mu$m auf. Das Längen-zu-Dicken-Verhältnis beträgt im allgemeinen mindestens 10, meistens 12 bis 40. Die Teilchenoberfläche gemessen nach BET liegt zwischen 18 und 70 m$^2$/g.

Wird ein derart charakterisiertes Goethit-Lepidokrokit-Gemenge vor der an sich bekannten Weiterverarbeitung zu ferrimagnetischen Eisenoxiden erfindungsgemäß bei Temperaturen zwischen 200 und 700°C, vorzugsweise zwischen 300 und 650°C und insbesondere zwischen 450 und 600°C entwässert, so lassen sich überraschenderweise die Werte für Koezitivfeldstärke und Remanenz der daraus erhältlichen Endprodukte verbessern. Die Entwässerung läßt sich sowohl in Luft wie auch in Inertgasatmosphäre durchführen.

Das nach dem Entwässerungsschritt vorhandene Produkt wird in an sich bekannter Weise mit weitgehend asche- und teerfrei zersetzlichen organischen Substanzen bei Temperaturen zwischen 300 und 650°C zu nadelförmigen ferrimagnetischen Eisenoxiden umgewandelt.

Zu diesem Zweck wird das entwässerte Goethit-Lepidokrokit-Gemenge mit der festen oder flüssigen organischen Substanz mechanisch vermischt oder in einer geeigneten Lösung oder Suspension der Substanz damit überzogen und anschließend unter Inertgas auf Temperaturen von 300 bis 650°C erhitzt. In gleicher Weise ist das Verfahren mittels gasförmiger organischer Substanzen, die dem Inertgas zudosiert werden, durchführbar. Als im Rahmen des erfindungsgemäßen Verfahrens einsetzbare organische Substanzen lassen sich alle nach dem Stand der Technik als geeignet angegebenen Verbindungen verwenden, soweit sie sich bei Temperaturen zwischen 300 und 650°C zusetzen lassen. Zweckmäßigerweise verwendet man hierzu höhere Fettsäuren, deren Derivate, Glyzerin, Inertgas/Alkoholdampf-Gemische und auch Methan. Je nach verwendeter organischer Substanz und entsprechend ausgewählter Reaktionstemperatur ist die Umwandlung des entwässerten Goethit-Lepidokrokit-Gemenges zum nadelförmigen Magnetit nach etwa 1 bis 120 Minuten beendet.

Der nach dieser Reduktionsreaktion erhaltene nadelförmige Magnetit wird üblicherweise zum Gamma-Eisen(III)oxid oxidiert, zweckmäßig durch Überleiten von Luft oder Zugabe von Sauerstoff bei Temperaturen von 200 bis 500°C.

Wird jedoch die angegebene Umwandlungsreaktion nicht unter Inertgas, sondern bereits in Gegenwart von Sauerstoff, wie z.B. Luft, durchgeführt, so kann direkt Gamma-Eisen(III)oxid erhalten werden, wenn hierbei die Oxidation bei Temperaturen unterhalb etwa 500°C erfolgt.

Die erfindungsgemäß hergestellten nadelförmigen ferrimagnetischen Eisenoxide, vor allem das $\gamma$-Eisen(III)oxid, zeigen unerwartet vorteilhafte Eigenschaften bei der Verwendung als Magnetpigmente für die Herstellung von Magnetogrammträgern. Zur Herstellung von magnetischen Schichten wird das Gamma-Eisen(III)oxid in polymeren Bindemitteln dispergiert. Als Bindemittel eignen sich für diesen Zweck bekannte Verbindungen, wie Homo- und Mischpolymerisate von Polyvinylderivaten, Polyurethanen, Polyestern und ähnliche. Die Bindemittel werden in Lösungen in geeigneten organischen Lösungsmitteln verwendet, die gegebenenfalls weitere Zusätze enthalten können. Die magnetischen Schichten werden auf starre oder biegsame Träger wie Platten, Folien und Karten aufgebracht.

Die gemäß der Erfindung hergestellten nadelförmigen ferrimagnetischen Eisenoxide, insbesondere das auf diese Weise erhältliche Gamma-Eisen(III)oxid, unterscheiden sich deutlich von den bekannten Gamma-Eisen(III)oxiden durch ihre gleichmäßigere Nadelform, da eine Agglomeration durch Zusammensintern vermiedet ist, durch ihre verbesserte Kristallinität und durch die höhere Koerzitivfeldstärke und Remanenz, welche überraschenderweise bei dem erfindungsgemäßen Verfahren zu erzielen sind. Diese Verbesserungen beim Magnetmaterial machen sich auch sehr deutlich bei den daraus hergestellten Magnetbändern bemerkbar.

Der Gegenstand der Erfindung wird anhand folgender Beispiele erläutert.

Die magnetischen Pulverwerte werden durch Messung einer auf ein Stopfgewicht von D = 1,2 g/cm$^3$ gebrachten Oxidprobe mit einem konventionellen Schwingmagnetometer bei 100 kA/m Meßfeldstärke bestimmt. Die Koerzitivfeldstärke ($H_c$) wird in [kA/m], die spezifische Remanenz ($M_r/\rho$) und die

"spezifische Magnetisierung ($M_m/\rho$) werden in [nT cm³/g] angegeben.

Beispiel 1

In einem 26-l-Reaktionsgefäß werden 7,31 Mol $FeCl_2$ (926,6 g) mit VE-Wasser zu 9 l gelöst und bei gleichzeitigem Durchleiten von 500 l Stickstoff/h eine Temperatur von 26°C eingestellt. Unter Rühren mit 500 Upm werden dann in 30 bis 40 Minuten 7,38 Mol NaOH (295,2 g) gelöst in 4,5 l VE-Wasser hinzugefügt. Nach beendetem NaOH-Eitrag wird 10 Minuten nachgerührt und dann anstelle von Stickstoff je Stunde 150 l Luft eingeleitet bis der pH-Wert auf etwa 3,4 abgefallen ist. Nach 2 h 30 Minuten wurde auf diese Weise eine orangefarbene Keimsuspension erhalten.

Unter weiterem Rühren mit 500 Upm und Durchleiten von 150 l Luft/h wird die Keimsuspension auf 40°C erwärmt. Nach Erreichen dieser Temperatur wird die Luftmenge auf 400 l/h erhöht und der pH-Wert durch Zulauf von wäßriger Natronlauge auf pH = 4 bis zum Reaktionsende gehalten. Dauer des Wachstums: 2 Stunden 40 Minuten.

Die Suspension wird auf eine Filternutsche mit Wasser gewaschen bis das Filtrat chloridfrei ist und dann bei 130°C im Trockenschrank getrocknet.

Das resultierende Eisenoxidhydroxid stellt ein Gemenge aus 94% Lepidokrokit und 6% Goethit dar, weist ein Längen-zu-Dicken-Verhältnis von 31 und eine spezifische Oberfläche nach BET von 34,7 m²/g auf.

Dieses Goethit-Lepidokrokit-Gemenge wird zur Entwässerung an Luft eine Stunde lang auf 490°C erhitzt. Das dabei entstehende Produkt wird nun mit 2 Gew.% Stearinsäure vermischt, in zwei gleiche Proben 1A und 1B geteilt und bei den in Tabelle 1 genannten Bedingungen unter Stickstoff zum Magnetit umgewandelt und an Luft zum Gamma-Eisen(III)oxid oxidiert. Die magnetischen Eigenschaften sind ebenfalls in Tabelle 1 angeführt.

*Vergleichsversuch 1*

Es wird wie in Beispiel 1 beschrieben verfahren, jedoch wird das Goethit-Lepidokrokit-Gemenge vor der Umwandlung und der Oxidation nicht entwässert. Reaktionsbedingungen und Meßergebnisse sind in Tabelle 1 angegeben.

TABELLE 1

| | Umwandlung | | Oxidation | | | M-Werte | |
|---|---|---|---|---|---|---|---|
| | T [°C] | Dauer [Min] | T [°C] | Dauer [Min] | $H_c$ | $M_m/\rho$ | $M_r/\rho$ |
| **Beispiel 1** | | | | | | | |
| Probe A | 470 | 20 | 290 | 90 | 25,9 | 76 | 41 |
| Probe B | 488 | 20 | 297 | 90 | 25,5 | 79 | 42 |
| **Vergl. Vers. 1** | | | | | | | |
| Probe A | 490 | 20 | 275 | 90 | 20,7 | 75 | 37 |
| Probe B | 510· | 20 | 285 | 60 | 20,9 | 78 | 38 |

Beispiel 2

Auf der Basis der Verfahrensweise gemäß Beispiel 1 werden Eisen(III)oxidhydroxid-Gemenge mit einem Lepidokrokit-Anteil von 72% mit einer spezifischen Oberfläche nach BET von 33,2 m²/g hergestellt. Diese Goethit-Lepidokrokit-Gemenge werden an Luft bei den in der Tabelle 2 angegebenen Temperaturen jeweils eine Stunde lang entwässert, dann bei 300°C unter Überleiten eines Stickstoff-Methanoldampf-Gemisches zum Magnetit reduziert und dann an Luft bei 400°C zum Gamma-Eisen(III)oxid oxidiert. Das Stickstoff-Methanol-Gemisch entsteht beim Durchleiten von Stickstoff in einer Menge von 50 l je Stunde durch einen auf 105°C erhitzten Behälter, dem Methanol zudosiert wird. Die resultierenden magnetischen Werte der Versuche sind ebenfalls in Tabelle 2 aufgeführt.

TABELLE 2

| Beispiel | Entwässerung °C | Reduktion °C | Oxidation °C | $H_c$ | $M_m/\rho$ | $M_r/\rho$ | BET m²/g |
|---|---|---|---|---|---|---|---|
| Vers. 1 (Vergl.-Vers.) | ohne Ent-wässerung | 300 | 400 | 22,1 | 77 | 42 | 24,5 |
| Vers. 2 | 300 | 300 | 400 | 23,2 | 76 | 42 | 20,6 |
| Vers. 3 | 400 | 300 | 400 | 24,1 | 74 | 41 | 22,1 |
| Vers. 4 | 500 | 300 | 400 | 26,1 | 80 | 45 | 19,2 |
| Vers. 5 | 600 | 300 | 400 | 27,0 | 78 | 46 | 18,7 |

**Beispiel 3**

Wie in Beispiel 1 beschrieben, wurden 4 Goethit-Lepidokrokit-Gemenge hergestellt. Die Probe D in einem 26-l-Reaktionsgefäß, die Proben E—G in einen 700-l-Rührkessel (Tabelle 3).

TABELLE 3

| Beispiel | Keimbildung T [°C] | Keimbildung Zeit [min] | Wachstum bei 40°C Zeit [min] | pH | $S_{N_2}$ [m²/g] | Röntgenuntersuchung % γ-FeOOH | Röntgenuntersuchung % α-FeOOH |
|---|---|---|---|---|---|---|---|
| Probe D | 30 | 90 | 80 | 5,0 | 33,8 | 92 | 8 |
| Probe E | 25 | 215 | 255 | 5,0—5,5 | 23,6 | 82 | 18 |
| Probe F | 30 | 90 | 90 | 5,0 | 25,5 | 94 | 6 |
| Probe G | 18 | 180 | 255 | 4—5 | 30,8 | 96 | 4 |

Die Umwandlungsbedingungen und die Magnetpulverwerte sind in den folgenden Tabellen 4 und 5 wiedergegeben.

TABELLE 4

| Ausgangsprodukt | Entwässerung | Reduktionsmittel | Reduktion | | Oxidation | | Magnetpulverwerte | | |
| | | | T [°C] | Zeit [min] | T [°C] | Zeit [min] | $H_c$ | $M_m/\rho$ | $M_r/\rho$ |
|---|---|---|---|---|---|---|---|---|---|
| Probe D | 30 min; 500°C · | Mischung aus 1,2% Stearinsäure 1,2% Stearinsäureamid 0,6% Lecithin | 600 | 30 | 230 | 90 | 27,8 | 75 | 42 |
| Vergleichsprobe | nicht entwässert | | 600 | 30 | 230 | 90 | 22,2 | 73 | 31 |
| Probe E | 30 min; 520°C | Mischung aus 1% Stearinsäure 2% Talgfettalkohol | 520—550 | 30 | 280 | 90 | 24,4 | 78 | 41 |
| Vergleichsprobe | nicht entwässert | | 520—550 | 30 | 280 | 90 | 21,4 | 75 | 39 |

In Tabelle 5 sind Proben aufgeführt, die in 30 Minuten bei der niedrigeren Entwässerungs- temperatur von 400°C entwässert und danach zu $\gamma$-$Fe_2O_3$ umgewandelt wurden.

TABELLE 5

| Ausgangsprodukt FeOOH | Reduktionsmittel | Reduktion | | Oxidation | | $H_c$ |
|---|---|---|---|---|---|---|
| | | T [°C] | Zeit [min] | T [°C] | Zeit [min] | |
| F | 3 % Stearin- säureamid | 600 | 30 | 280 | 30 | 25,7 |
| G | 3 % Glycerin- trioleat | 520 | 25 | 230 | 60 | 23,0 |
| E | 3 % Glycerin | 520 | 25 | 230 | 60 | 23,4 |

Beispiel 4

49,5 l einer 30,1%igen $FeCl_2$-Lösung und 180 l Trinkwasser werden in einem 700-l-Kessel vorgelegt. Der pH-Wert der Vorlage betrug 3,6; die Temperatur lag bei 16°C.

Innerhalb 30 Minuten wurden unter Rühren 120 l einer wäßrigen Lösung von NaOH, hergestellt aus 97,2 l Trinkwasser und 22,8 l einer 25%igen Natronlauge, eingetragen. Dies entspricht einer 56%igen Ausfällung bezogen auf Fe(II). Nach der Laugenzugabe wurden ein pH-Wert von 7,2 und eine Temperatur von 17°C gemessen.

Nach beendetem NaOH-Eintrag wird 5 Minuten nachgerührt und dann zur Oxidation 5 m³ Luft/h eingeleitet. Innerhalb von 40 Minuten wurde gleichzeitig die Temperatur auf 24°C erhöht. Nach 4 Stunden und 5 Minuten war die Keimbildung beendet. Der pH-Wert war auf 3,4 abgefallen.

Unter weiterem Durchleiten von 5 m³ Luft/h wurde die Keimsuspension in 1 Stunde auf 20 Minuten auf 33°C erwärmt. Danach wurde die Luftmenge auf 8 m³/h erhöht und durch Zugabe von wäßriger Natronlauge der pH-Wert auf 5,5 eingestellt. und bis Reaktionsende auf diesem Wert geregelt. Beginnend mit der Erhöhung der Luftmenge auf 8 m³/h wurde gleichzeitig in 30 Minuten auf 38 bis 39°C aufgeheizt und diese Temperatur bis zum Ende der Wachstumsreaktion gehalten.

Nach 1 Stunde und 40 Minuten war die Oxidation zu Ende. Nach der Filtration über eine Filterpresse wird das Produkt mit Wasser gewaschen bis das Filtrat chloridfrei ist und dann bei 110°C im Trockenschrank getrocknet.

Das resultierende Eisen(III)oxidhydrat stellt ein Gemenge aus 92% Lepidokrokit und 8% Goethit dar, weist ein Längen-zuDicken-Verhältnis von 16 auf und eine spezifische Oberfläche nach BET von 23,3 m²/g.

Von diesem Goethit-Lepidokrokit-Gemenge werden 200 g zur Entwässerung an Luft 30 Minuten lang auf 500°C erhitzt. Das dabei entstehende Produkt wird mit 2% Stearinsäure gemischt und dann in einem Trockenschrank 30 Minuten lang bei 110 bis 120°C gehalten. Die nachfolgende Reduktion zu $Fe_3O_4$ wurde bei 550°C in 30 Minuten, die Oxidation zu $\gamma$-$Fe_2O_3$ mit Luft nach dem Abkühlen des $Fe_3O_4$ auf 280°C in 90 Minuten durchgeführt (Probe H).

Eine Vergleichsprobe J wurde ohne die Entwässerung aus dem gleichen Ausgangsprodukt bei sonst gleichen Bedingungen hergestellt (Tabelle 6).

TABELLE 6

| | $H_c$ | $M_m/\rho$ | $M_r/\rho$ |
|---|---|---|---|
| Probe H | 26,8 | 82 | 43 |
| Vergleichsprobe J | 21,7 | 79 | 36 |

Aus den beiden Gamma-Eisen(III)oxid-Proben H und J werden Magnetpigmentdispersionen und anschließend Magnetbänder hergestellt.

Zur Herstellung der beiden Magnetdispersionen werden Topfmühlen mit 8 000 Teilen Stahlkugeln mit einem Durchmesser von 5 mm gefüllt und anschließend mit 700 Teilen des jeweiligen Magnetmaterials, 420 Teilen eines Gemisches aus gleichen Teilen Tetrahydrofuran und Dioxan, 8,75 Teilen Lecithin, 8,75 Teilen eines neutralen Polyaminoamidsalzes und 210 Teilen einer 20%igen Lösung eines Copolymerisates aus 80% Vinylchlorid, 10% Dimethylmaleinat und 10% Diäthylmaleinat (K-Wert = 58) in einem Gemisch aus gleichen Teilen Tetrahydrofuran und Dioxan versehen. Die Mischung wird 40 Stunden vordispergiert. Anschließend werden 1 090 Teile einer 10%igen Lösung eines thermoplastischen Polyesterurethans aus Adipinsäure, 1,4-Butandiol und 4,4'-Diisocyanatodiphenylmethan in einem Gemisch aus gleichen Teilen Tetrahydrofuran und Dioxan, 0,7 Teile Polydimethylsiloxan zugesetzt. Nach weiterem 5-stündigem Dispergieren wird die erhaltene Magnetdispersion unter Druck durch ein Filter vom 5 $\mu$m Porenweite filtriert. Mit einem Linealgießer wird nach der üblichen Technik eine 6 $\mu$m starke Polyäthylenterephthalatfolie mit der Magnetdispersion beschichtet und nach Durchlaufen eines Magnetfeldes bei Temperaturen zwischen 60 und 100°C getrocknet. Nach der Trocknung trägt die Folie eine Magnetschicht von 5 $\mu$m Dicke. Durch Hindurchführen zwischen beheizten Walzen (80°C unter einem Liniendruck von ca. 3 kg/cm) wird die Magnetschicht verdichtet. Die beschichtete Folie wird in Bänder von 6,25 Breite geschnitten.

Die elektroakustische Messung erfolgt nach DIN 45 512, Teil II.

Die Meßergebnisse enthält Tabelle 7.

TABELLE 7

| | | Probe H | Probe J |
|---|---|---|---|
| **Bandmagnetwerte** | | | |
| $H_c$ | [ kA /m ] | 25,8 | 21,0 |
| $M_m$ | [ mT ] | 170 | 167 |
| $M_r$ | [ mT ] | 147 | 125 |
| $M_r/M_m$ | | 0,86 | 0,75 |
| $E_{333}$ | | 0 | +0,3 |
| $E_{10}$ kHz | | −0,4 | −1,8 |
| $A_T$ | | −0,5 | −2,0 |
| $A_H$ | | 0 | −2,8 |
| $RG_o$−A−Kurve | | −1,3 | −1,5 |
| Kd | | +2 | −0,3 |

## Patentansprüche

1. Verfahren zur Herstellung von nadelförmigen ferrimagnetischen Eisenoxiden durch Entwässern nadelförmiger Eisen(III)oxidhydroxide zu nadelförmigen Eisen(III)oxiden, anschließender Reduktion dieser Eisen(III)oxide bei Temperaturen zwischen 300 und 650°C mittels in diesem Temperaturbereich zersetzlicher organischer Verbindungen und Oxidation des Reduktionsproduktes mit sauerstoffhaltigen Gasen bei 200 bis 500°C, *dadurch gekennzeichnet,* daß das eingesetzte nadelförmige Eisen(III)oxihydroxid aus einem Gemenge aus Goethit und Lepidokrokit mit einem Lepidokrokitanteil von mindestens 60% und bis zu 98% besteht und bei Temperaturen von 250 bis 700°C entwässert wird.

2. Verfahren nach Anspruch 1, *dadurch gekennzeichnet,* daß die nadelförmigen Eisen(III)oxidhydroxide des Gemenges ein Längen-zu-Dicken-Verhältnis von mindestens 10 aufweisen und bei 300 bis 650°C entwässert werden.

3. Verwendung der gemäß Anspruch 1 hergestellten nadelförmigen ferrimagnetischen Eisenoxide als magnetisches Material zur Herstellung von magnetischen Aufzeichnungsträgern.

## Claims

1. A process for the manufacture of acicular ferrimagnetic iron oxide by dehydrating acicular iron(III) oxide hydroxide to give acicular iron(III) oxide, then reducing this iron(III) oxide at from 300 to 650°C by means of an organic compound which decomposes in this temperature range, and oxidizing the reduced product with an oxygen-containing gas at from 200 to 500°C, *characterized in that* the acicular iron(III) oxide hydroxide employed consists of a mixture of goethite and lepidocrocite comprising at least 60% and up to 98% of lepidocrocite and is dehydrated at from 250 to 700°C.

2. A process as claimed in claim 1, *characterized in that* the acicular iron(III) oxide hydroxide in the mixture has a length/width ratio of at least 10 and is dehydrated at from 300 to 650°C.

3. Use of the acicular ferrimagnetic iron oxide produced in accordance with claim 1 as magnetic material for the production of magnetic recording media.

**Revendications**

1. Procédé de préparation d'oxydes de fer ferrimagnétiques aciculaires, dans lequel on déshydrate des oxydes hydratés de fer (III) aciculaires en oxydes de fer (III) aciculaires, on réduit ensuite ces oxydes de fer (III) à des températures comprises entre 300 et 650°C au moyen de composés organiques se décomposant dans cette plage de température et on oxyde le produit de réduction avec des gaz contenant de l'oxygène entre 200 et 500°C, caractérisé par le fait que l'oxyde hydraté de fer (III) aciculaire que l'on utilise est composé d'un mélange de goethite et de lépidocrocite avec une teneur en lépidocrocite d'au moins 60% et pouvant aller jusqu'à 98% et la déshydratation s'effectue à des températures de 250 à 700°C.

2. Procédé selon la revendication 1, caractérisé par le fait que les oxydes hydratés de fer (III) aciculaires du mélange présentent un rapport longueur/épaisseur d'au moins 10 et sont déshydratés entre 300 et 650°C.

3. Utilisation des oxydes de fer ferrimagnétiques aciculaires préparés selon la revendication 1 en tant que matériau magnétique pour la fabrication de supports d'enregistrement magnétiques.